Europäisches Patentamt

European Patent Office

Office européen des brevets

(19)

(11) Numéro de publication : **0 020 240**
**B1**

(12) FASCICULE DE BREVET EUROPÉEN

(45) Date de publication du fascicule du brevet :
16.02.83

(51) Int. Cl.³ : **B 01 J 23/62**, C 10 G 35/09,
C 07 C 5/27

(21) Numéro de dépôt : 80400705.2

(22) Date de dépôt : 21.05.80

(54) **Catalyseurs d'hydrotraitement d'hydrocarbures et applications desdits catalyseurs au reformage et à l'isomérisation d'hydrocarbures en présence d'hydrogène.**

(30) Priorité : 22.05.79 FR 7913029

(43) Date de publication de la demande :
10.12.80 Bulletin 80/25

(45) Mention de la délivrance du brevet :
16.02.83 Bulletin 83/07

(84) Etats contractants désignés :
**BE DE GB IT NL**

(56) Documents cités :
FR A 2 332 316
US A 3 851 003
US A 3 915 845
US A 4 003 852
US A 4 141 817

(73) Titulaire : **COMPAGNIE FRANCAISE DE RAFFINAGE**
**Société anonyme dite:**
**5, rue Michel-Ange**
**F-75781 Paris Cedex 16 (FR)**

(72) Inventeur : **Engelhard, Philippe**
**197, rue Félix Faure**
**F-76620 Le Havre (FR)**
Inventeur : **Szabo, Georges**
**71, Boulevard de Strasbourg**
**F-76600 Le Havre (FR)**

(74) Mandataire : **Jolly, Jean-Pierre et al**
**Cabinet BROT 83, rue d'Amsterdam**
**F-75008 Paris (FR)**

Jouve, 18, rue St-Denis, 75001 Paris, France

Catalyseurs d'hydrotraitement d'hydrocarbures et applications desdits catalyseurs au reformage et à l'isomérisation d'hydrocarbures en présence d'hydrogène

La présente invention concerne de nouveaux catalyseurs d'hydrotraitement d'hydrocarbures. Elle concerne également l'application de ces catalyseurs au reformage et à l'isomérisation d'hydrocarbures en présence d'hydrogène.

Par procédé d'hydrotraitement catalytique, on désigne les traitements appliqués à des charges hydrocarbonées, en présence d'hydrogène et d'un catalyseur, qui mettent en jeu, de façon séparée ou simultanée, des réactions d'hydrogénation, de déshydrogénation, d'isomérisation, de cyclisation, de déshydrocyclisation et d'aromatisation.

Un exemple de procédé dans lequel ces réactions existent simultanément est l'hydroreformage catalytique, procédé plus particulièrement réservé au traitement des coupes pétrolières destinées à la fabrication des essences, dans le but d'augmenter l'indice d'octane de ces coupes. Ce procédé connaît un grand développement de par la demande actuelle d'essence pour moteurs. Par ailleurs, la tendance présente à la réduction de la pollution atmosphérique causée par les véhicules automobiles nécessite l'obtention d'essences pouvant être utilisées directement, sans addition de plomb tétraéthyle destiné à relever l'indice d'octane.

Dans l'hydroreformage catalytique, les conditions du traitement sont choisies de manière à limiter les réactions de craquage et à favoriser les réactions de déshydrocyclisation, déshydrogénation et isomérisation.

Les réactions de déshydrocyclisation et de déshydrogénation conduisent, en particulier, à partir respectivement des paraffines et des naphtènes, à la formation d'hydrocarbures aromatiques, qui, outre leur intérêt comme carburants, en raison de leur indice d'octane élevé, peuvent également être utilisés comme matières premières dans l'industrie pétrochimique.

Un autre exemple de procédé d'hydrotraitement catalytique est le procédé d'isomérisation des hydrocarbures. Ce procédé peut être notamment appliqué aux hydrocarbures aromatiques, aliphatiques saturés ou oléfiniques. Par exemple, il peut être utilisé dans le cas des hydrocarbures aromatiques pour augmenter la production de paraxylène, qui est une matière première particulièrement intéressante dans la fabrication des polyesters.

Les catalyseurs les plus répandus sont ceux contenant un métal de la mine du platine, en général le platine, supporté par un oxyde minéral réfractaire à grande surface spécifique, comme l'alumine, par exemple. On a été amené à utiliser des catalyseurs bi ou tri-métalliques, qui permettent d'améliorer certaines des propriétés des catalyseurs, comme la stabilité, par exemple.

Des catalyseurs contenant de l'étain et du platine sont ainsi connus. Par exemple, le brevet français n° 2 031 984 et son addition n° 2 130 881, dont la Demanderesse est titulaire, décrivent des catalyseurs contenant du platine et, éventuellement, de l'iridium, ainsi qu'au moins un élément appartenant au groupe constitué par le plomb, l'étain et le germanium.

Des catalyseurs contenant du platine, de l'étain et des métaux du groupe IA ou IIA, sont également connus par les brevets US n° 3 851 003, 3 909 451 et 3 998 900. Dans les exemples décrits dans ces brevets, il s'agit toujours de catalyseurs présentant un rapport M2/M1 du nombre d'atomes d'un métal M2 des groupes IA ou IIA au nombre d'atomes M1 d'un métal de la mine du platine toujours supérieur à 10. Ces catalyseurs sont utilisés pour la déshydrogénation d'hydrocarbures aliphatiques saturés notamment. Ces brevets indiquent que la présence d'un métal alcalin ou alcalino-terreux diminue les réactions d'isomérisation et d'aromatisation.

US-A 4 003 852 décrit également un catalyseur de déshydrogénation d'hydrocarbures comprenant un support en oxyde minéral réfractaire, un élément halogène présent sous forme combinée, 0,01 à 2 % en poids de platine, 0,01 % à 2 % en poids d'iridium, 0,01 % à 5 % d'étain et 0,1 à 5 % d'un métal alcalin ou alcalino-terreux sous forme combinée.

Le rapport du nombre d'atomes du métal alcalin ou alcalino-terreux au nombre d'atomes de platine est compris entre 5/1 et 50/1 et le rapport atomique Ir/Pt entre 0,1/1 et 2/1.

US-A-4 141 817 décrit un catalyseur d'hydroréformage comprenant au moins un métal du groupe VIII, en combinaison avec un oxyde d'un métal du groupe IIA, sur un support d'alumine, dans lequel le rapport M2/M1 est inférieur à 10.

La Demanderesse a constaté qu'il est possible d'augmenter, dans un procédé d'hydroréformage, le rendement en hydrocarbures, aromatiques notamment, favorisant l'obtention de carburant à haut indice d'octane, en utilisant des catalyseurs qui, outre un métal de la mine du platine et de l'étain, contiennent au moins un métal choisi dans le groupe constitué par les métaux IA et IIA de la classification périodique des éléments ayant un rapport M2/M1 au plus égal à 10, ces catalyseurs étant également utilisables pour l'isomérisation des hydrocarbures alkylaromatiques.

Le but de la présente invention est donc de proposer des catalyseurs permettant, d'une part, l'obtention, avec des rendements améliorés, d'effluents ayant un très bon indice d'octane et, d'autre part, l'isomérisation d'hydrocarbures alkylaromatiques.

A cet effet, la présente invention a pour premier objet des catalyseurs d'hydrotraitement d'hydrocarbures comprenant :

— un support en oxyde minéral réfractaire,
— un élément halogène présent sous forme combinée,
— sous forme libre ou combinée :

a) de 0,02 à 2 % et, de préférence, de 0,10 à 0,70 %, rapporté au poids total du catalyseur, d'au moins un métal M1 appartenant à la mine du platine,

b) de 0,02 à 2 % et, de préférence, de 0,05 à 0,60 %, rapporté au poids total du catalyseur, d'étain,
— sous forme combinée, au moins un métal M2 choisi dans les groupes IA et IIA de la classification périodique des éléments, ce catalyseur étant caractérisé en ce que la quantité du métal M2 est telle que le rapport M2/M1 du nombre d'atomes du métal M2 au nombre d'atomes du métal M1 soit tel que $0,2 \leqslant M2/M1 \leqslant 10$, et en ce que l'élément halogène représente 0,3 à 3 % du poids total du catalyseur.

Dans cette définition de l'invention et dans l'ensemble de la présente demande, l'expression « métal de la mine du platine » désigne l'un des métaux suivants :

— le ruthénium,
— le rhodium,
— le palladium,
— l'osmium,
— l'iridium,
— le platine.

L'invention concerne plus particulièrement les catalyseurs définis ci-dessus et dans lesquels le support a une surface spécifique supérieure à 15 m² par gramme et un volume poreux spécifique supérieur à 0,1 cm³ par gramme.

Un deuxième objet de la présente invention est constitué par l'application des catalyseurs définis ci-dessus à l'hydroréformage d'une coupe pétrolière contenant moins de 10 p.p.m. (parties par million) en poids — et, de préférence, moins de 1 p.p.m. — de soufre et dont la température d'ébullition à la pression atmosphérique est comprise entre 35 et 250 °C.

Un troisième objet de l'invention est constitué par l'application des catalyseurs conformes à l'invention à l'isomérisation des hydrocarbures en présence d'hydrogène.

Les supports des catalyseurs conformes à l'invention doivent être des substances réfractaires possédant une surface et un volume poreux spécifiques suffisants. La surface spécifique est comprise entre 15 et 350 m²/gramme et, de préférence, entre 100 et 350 m²/gramme, le volume poreux spécifique étant supérieur à 0,1 cm³ par gramme ; les substances doivent présenter, en outre, un caractère acide plus ou moins marqué, car on sait que les réactions d'isomérisation se produisent sur des sites acides. Par exemple, l'alumine ainsi que les aluminosilicates conviennent bien à la réalisation de ces supports.

Les catalyseurs les plus avantageux sont ceux dont la teneur en métal de la mine du platine, rapportée au poids total du catalyseur, est comprise entre 0,02 et 2 %. Pour obtenir des propriétés catalytiques satisfaisantes, la teneur de ce métal est de préférence supérieure à 0,10 % mais, pour des raisons de coût du catalyseur, elle est de préférence limitée à 0,70 %.

La teneur en étain, rapportée au poids total du catalyseur, est comprise entre 0,02 et 2 %, car, en dessous de 0,02 % et au-dessus de 2 %, l'amélioration des propriétés catalytiques, par rapport à un catalyseur ne contenant que du platine, ne se fait pas sentir.

La Demanderesse a en outre observé que les teneurs les plus efficaces sont celles situées entre 0,05 et 0,60 %.

La teneur en halogène, rapportée au poids total du catalyseur, est comprise entre 0,3 et 3 % et, de préférence, entre 0,6 et 2,3 %. L'halogène présent dans les catalyseurs conformes à l'invention est de préférence le chlore. Il peut être introduit dans la composition du catalyseur de façon connue dans la technique, par exemple pendant la préparation du support, ou au cours du dépôt des éléments métalliques, par utilisation de solutions de chlorures métalliques par exemple.

La teneur en métal M2 des groupes IA et IIA est telle que le rapport M2/M1 du nombre d'atomes du métal M2 au nombre d'atomes du métal M1 de la mine du platine soit compris entre 0,2 et 10 et, de préférence, entre 0,5 et 5, car, pour des valeurs inférieures de ce rapport, le rendement en effluent à haut indice d'octane n'est pas amélioré et, pour des valeurs supérieures, la stabilité du catalyseur diminue.

La Demanderesse a ainsi réalisé des catalyseurs dans lesquels le métal M2 est le sodium, le lithium, le potassium, le calcium ou le baryum.

Les catalyseurs conformes à l'invention peuvent être préparés par des procédés classiques d'imprégnation du support à l'aide de solutions contenant les éléments à déposer.

L'imprégnation du support peut se faire :

a) soit à l'aide d'au moins une solution contenant les trois éléments à déposer,

b) soit à l'aide d'au moins deux solutions, l'une contenant deux éléments à déposer et l'autre le troisième,

c) soit à l'aide d'au moins trois solutions, chacune de ces solutions contenant un des éléments à déposer.

Les dépôts des métaux peuvent être effectués à partir de solutions de composés solubles de ces métaux, comme l'acide hexachloroplatinique, le chlorure stanneux ou le chlorure du métal des groupes IA et IIA.

Le dépôt de l'étain est effectué de préférence avant le dépôt du métal de la mine du platine.

Lorsque les dépôts des métaux ne sont pas effectués simultanément, le solide obtenu peut être calciné entre les dépôts, à une température qui, dans le cas de l'étain, est comprise entre 400 et 700 °C et est, de préférence, inférieure ou égale à 600 °C, cette température de calcination étant, dans le cas des métaux de la mine du platine, inférieure à 600 °C et, dans le cas du platine, inférieure à 550 °C. Dans le cas des métaux des groupes IA et IIA, la température de calcination est inférieure à 600 °C.

Après le dépôt de tous les métaux, le solide obtenu est calciné à une température inférieure à 550 °C. Préalablement à cette calcination, et après le dernier dépôt, il est possible d'ajuster la teneur en halogène dudit solide par des moyens connus, comme par exemple un traitement d'oxychloration.

L'acidité du support peut être modifiée préalablement au dépôt des éléments, lors du dépôt ou entre les dépôts, lorsque ces derniers ne sont pas simultanés, par un traitement à l'acide, l'acide chlorhydrique par exemple.

Les catalyseurs selon l'invention peuvent être appliqués à l'hydrotraitement de charges d'hydrocarbures.

Ils sont notamment intéressants dans les procédés d'hydroreformage de coupes pétrolières destinées à la fabrication d'essences à haut indice d'octane, ainsi que dans les procédés d'isomérisation des hydrocarbures aromatiques.

Le catalyseur peut être activé, avant l'hydrotraitement, par réduction à l'aide d'hydrogène.

L'activité du catalyseur peut être maintenue, en cours d'hydrotraitement, par addition à la charge d'un composé halogéné soluble (un chlorure par exemple) ; il peut être avantageux, également, de présulfurer le catalyseur, par un courant d'hydrogène sulfuré par exemple, de façon à limiter les réactions de craquage qui tendent à se produire au début du traitement.

L'opération d'hydroreformage s'effectue dans les conditions suivantes :

— température comprise entre 450 et 600 °C,
— pression comprise entre 5 et 50 bars,
— rapport molaire hydrogène/hydrocarbures compris entre 2 et 10,
— vitesse spatiale horaire de la charge (volume de gaz passant par heure sur une unité de volume de catalyseur) comprise entre 0,5 et 5.

Le procédé d'hydroreformage, utilisant les catalyseurs selon l'invention, peut être notamment du type dit « régénératif », une partie du catalyseur étant prélevée en continu dans le réacteur, régénérée en continu par combustion du carbone formé avec de l'oxygène, dilué ou non, puis recyclée en continu au réacteur, après activation par réduction à l'aide d'hydrogène.

L'opération d'isomérisation des hydrocarbures aromatiques s'effectue dans les conditions suivantes :

— température comprise entre 300 et 600 °C,
— pression comprise entre 5 et 50 bars,
— rapport molaire hydrogène/hydrocarbures compris entre 2 et 20,
— vitesse spatiale horaire de la charge (définie comme ci-dessus) comprise entre 0,5 et 5.

Comme le montreront les exemples suivants, qui n'ont aucun caractère limitatif, la Demanderesse a obtenu des résultats très intéressants avec divers catalyseurs conformes à l'invention.

L'exemple 1 concerne la préparation de catalyseurs conformes à l'invention et de catalyseurs témoins.

L'exemple 2 concerne l'application de catalyseurs conformes à l'invention et de catalyseurs témoins à l'hydroreformage d'une charge de normal-heptane.

La nature de cette charge ne constitue pas une limitation du domaine d'application desdits catalyseurs, car on utilise habituellement une telle charge pour tester les performances des catalyseurs d'hydroreformage. Les résultats obtenus peuvent donc être étendus au cas où la charge est une coupe destinée à la fabrication d'essence à haut indice d'octane, dont la température d'ébullition est comprise entre 35 et 250 °C, et dont la teneur en soufre est inférieure à 10 p.p.m. (parties par million) et de préférence à 1 p.p.m.

L'exemple 3 concerne l'isomérisation d'une charge constituée par un mélange d'éthylbenzène, de xylènes et de toluène.

Exemple 1

Cet exemple concerne la préparation, à partir d'une alumine de départ :

1. d'un catalyseur témoin T, constitué de platine, d'étain et d'alumine, et contenant moins de 100 p.p.m. de sodium, cette faible quantité de sodium provenant vraisemblablement de l'alumine de départ et

4

de l'eau employée lors de sa préparation ;

2. de catalyseurs A1, A2, A3, A4, A5, B, C, D, E, constitués de platine, d'étain et d'alumine, et contenant en outre plus de 10 p.p.m. d'un métal des groupes IA ou IAA introduit dans le catalyseur selon un mode de préparation qui sera décrit plus loin.

L'alumine de départ dont on dispose se présente sous la forme d'extrudés, dont les caractéristiques sont les suivantes :

— diamètre moyen des extrudés :       1,5 mm,
— surface spécifique :       190 m²/g,
— volume poreux :       0,51 cm³/g,
— teneur en chlore (mesurée par fluorescence X) :       0,5 % du poids de l'alumine.

Cette alumine est calcinée pendant 4 heures à 600 °C ; elle constituera le support des catalyseurs préparés et testés dans le présent exemple, et sera appelée ci-après alumine-support.

### Préparation du catalyseur-témoin T

On plonge 100 g de l'alumine de départ dans 250 cm³ d'une solution aqueuse contenant 7 cm³ d'acide chlorhydrique et 7 cm³ d'acide nitrique, qui est mise en circulation sur l'alumine pendant une demi-heure.

On ajoute ensuite à la solution précédente une deuxième solution contenant 0,380 g de chlorure stanneux $SnCl_2$, $2H_2O$, 10 cm³ d'acide chlorhydrique et 10 cm³ d'eau. La solution résultante est mise en circulation pendant 2 heures.

Après essorage, le solide obtenu est plongé dans 80 cm³ d'eau, qui sont mis en circulation pendant 2 heures.

Après un nouvel essorage, le solide obtenu est plongé dans 120 cm³ d'une solution d'acide hexachloroplatinique contenant 3 g/l de platine. Cette solution est mise en circulation pendant 4 heures.

Après essorage, l'alumine est séchée pendant 1 heure, à 120 °C, puis calcinée à 530 °C, pendant 2 heures.

La composition du catalyseur T obtenu est la suivante :

— en platine (% en poids) :       0,40,
— étain (% en poids) :       0,21,
— chlore (% en poids) :       0,98,
— sodium (p.p.m.) :       58 .

### Préparation des catalyseurs A1, A2, A3, A4, A5, B, C, D et E

Les catalyseurs A1, A2, A3, A4, A5, B, C, D et E sont préparés de façon semblable au catalyseur T jusqu'à l'étage de calcination à 530 °C, après le dépôt du platine.

On place alors 100 g du solide obtenu dans un évaporateur rotatif avec 250 cm³ d'une solution de chlorure d'un métal des groupes IA ou IIA de concentration variable. La composition des solutions est donnée dans le Tableau I ci-après :

Tableau I

| Catalyseur | Solution de chlorure de | Concentration en g/l |
|:---:|:---:|:---:|
| A1 | sodium | 0,132 |
| A2 | - d°- | 0,538 |
| A3 | - d°- | 0,843 |
| A4 | - d°- | 0,884 |
| A5 | - d°- | 1,493 |
| B | potassium | 0,917 |
| C | lithium | 0,274 |
| D | calcium | 1,554 |
| E | baryum | 3,344 |

Après évaporation, les solides sont séchés pendant 18 heures à 120 °C, puis calcinés pendant 2 heures à 530 °C.

Le réglage de la teneur en chlore est effectué par un traitement d'oxychloration.

On obtient ainsi les catalyseurs A1, A2, A3, A4, A5, B, C, D et E, dont la composition est donnée dans le Tableau II ci-après :

Tableau II

| Catalyseur | Platine (% en poids) | Etain (% en poids) | Chlore (% en poids) | Métal des groupes IA ou IIA | |
|---|---|---|---|---|---|
| | | | | Nature | Teneur (en p.p.m.) |
| A1 | 0,40 | 0,21 | 0,89 | sodium | 130 |
| A2 | 0,40 | 0,21 | 0,89 | –d°– | 530 |
| A3 | 0,40 | 0,21 | 2,15 | –d°– | 830 |
| A4 | 0,40 | 0,21 | 0,97 | –d°– | 870 |
| A5 | 0,40 | 0,21 | 1,06 | –d°– | 1470 |
| B | 0,40 | 0,21 | 0,87 | potassium | 1200 |
| C | 0,40 | 0,21 | 0,90 | lithium | 150 |
| D | 0,40 | 0,21 | 0,87 | calcium | 1400 |
| E | 0,40 | 0,21 | 0,89 | baryum | 5500 |

Exemple 2

Cet exemple concerne des essais catalytiques d'hydroreformage d'une charge de normal-heptane avec les catalyseurs préparés dans l'Exemple 1.

On place dans un réacteur en acier inoxydable 25 cm³ de catalyseur ; on fait passer un courant d'hydrogène pur et sec sur le catalyseur pendant 2 heures, la température de celui-ci étant maintenue vers 500 °C et la pression dans le réacteur étant maintenue à 7 bars. Puis on introduit la charge constituée par du normal-heptane, avec une vitesse spatiale horaire égale à 2 et un rapport du nombre de moles d'hydrogène introduites au nombre de moles de normal-heptane introduites égal à 5.

Les essais sont conduits à indice d'octane fixe, c'est-à-dire, dès que l'on constate une baisse de l'indice d'octane, on augmente la température du réacteur, de manière à faire remonter l'indice d'octane à la valeur initialement choisie, qui, dans cet exemple, est de 103.

Des prélèvements effectués sur l'effluent du réacteur permettent de connaître, d'une part, la composition de l'effluent et, d'autre part, l'indice d'octane équivalent du liquide, par application aux analyses chromatographiques des indices de mélange ASTM figurant sur des abaques bien connues de l'homme de l'art.

La variation de la température du réacteur en fonction du temps est très sensiblement assimilable à une droite dont on mesure la pente. Plus la pente de cette droite est faible, meilleur est le catalyseur, puisqu'il suffit alors de modifier très peu la température au cours du temps pour obtenir l'indice d'octane désiré. Le temps nécessaire pour atteindre la température limite d'utilisation s'en trouve allongé, ce qui est un avantage indiscutable sur le plan industriel.

Les résultats des essais sont donnés dans le Tableau III ci-après.

Tableau III

| Essai | Catalyseur | Rendement moyen en C5+ (% en poids) (1) | Rendement moyen en hydrogène (1/1) (2) | Température initiale (°C) | Pente de la droite T = f (temps) |
|---|---|---|---|---|---|
| T1 | T | 59,5 | 227,9 | 509,4 | 0,073 |
| A11 | A1 | 59,7 | 219,0 | 512,6 | 0,090 |
| A21 | A2 | 61,2 | 223,8 | 516,5 | 0,073 |
| A41 | A4 | 62,2 | 251,2 | 522,9 | 0,100 |
| A51 | A5 | 63,8 | 276,7 | 536,3 | 0,151 |
| B11 | B | 63,1 | 270,5 | 539,1 | 0,243 |
| C11 | C | 61,0 | 232,2 | 526,1 | 0,095 |
| D11 | D | 63,3 | 264,7 | 542,1 | 0,125 |
| E11 | E | 64,5 | 287,9 | 547,7 | 0,162 |

(1) C5+ : Les hydrocarbures à 5 et plus de 5 atomes de carbone, y compris les hydrocarbures aromatiques. Ce chiffre est particulièrement représentatif du rendement obtenu avec le catalyseur, ces hydrocarbures ayant un indice d'octane élevé.

(2) 1/1 : Litres d'hydrogène/litre de charge mesurés dans les conditions normales. Ce chiffre est également représentatif du rendement, car l'hydrogène est obtenu par des réactions de déshydrogénation et de déshydrocyclisation.

**0 020 240**

On peut constater, à la lecture du tableau, que les rendements en C5$^+$ et en hydrogène sont plus élevés, quand il y a présence de métaux des groupes IA ou IIA en quantité plus importante que dans le catalyseur témoin, ce qui montre la supériorité des catalyseurs selon l'invention.

Exemple 3

Cet essai concerne l'isomérisation d'une charge constituée par un mélange d'éthylbenzène, de xylènes et de toluène à l'aide de catalyseur A3 selon l'invention.

On place dans un réacteur en acier inoxydable 20 cm$^3$ du catalyseur A3 ; on fait passer un courant d'hydrogène pur et sec sur le catalyseur pendant 2 heures, la température de celui-ci étant maintenue à 500 °C et la pression dans le réacteur étant de 22 bars. Après avoir ramené la température à 480 °C, on introduit la charge, qui a la composition suivante, en % en poids :

— toluène :                 1,08,
— éthylbenzène :            26,15,
— para-xylène :              2,34,
— méta-xylène :             68,19,
— ortho-xylène :             2,23.

La charge est introduite avec une vitesse spatiale horaire égale à 2 et un rapport du nombre de moles d'hydrogène introduites au nombre de moles d'hydrocarbures égal à 7,5.

Les effluents sont prélevés après 19 h 30, 23 h et 26 h 15. L'effluent liquide condensé est analysé par chromatographie.

Les résultats figurent dans le Tableau IV ci-après.

Tableau IV

| | | | 19h30 | 23h | 26h15 |
|---|---|---|---|---|---|
| Temps | | | 19h30 | 23h | 26h15 |
| Rendement en produits liquides en % | | | 100 | 96,80 | 97,63 |
| Composition de l'effluent en % en poids | | Hydrocarbures légers non condensés | 0 | 3,20 | 2,37 |
| | Produits liquides | Hydrocarbures ayant de 1 à 4 atomes de carbone | 0 | 0,11 | 0,06 |
| | | Hydrocarbures à 5 atomes de carbone | 0 | 0,14 | 0,09 |
| | | Hydrocarbures à 6 atomes de carbone autres que le benzène | 0 | 0,18 | 0,08 |
| | | Benzène | 0,31 | 0,74 | 0,70 |
| | | Hydrocarbures à 7 atomes de carbone autres que le toluène | 0,05 | 0,38 | 0,38 |
| | | Toluène | 2,10 | 3,21 | 3,24 |
| | | Hydrocarbures à 8 atomes de carbone autres que les xylènes ou l'éthylbenzène | 0,92 | 0,53 | 0,45 |
| | | Ethylbenzène | 21,12 | 17,80 | 18,26 |
| | | Para-xylène | 14,01 | 16,74 | 15,99 |
| | | Méta-xylène | 50,22 | 43,03 | 44,40 |
| | | Ortho-xylène | 11,27 | 13,94 | 13,98 |
| Conversion de l'éthylbenzène | | | 19,24 | 31,93 | 30,17 |
| Rapport $\dfrac{\text{xylènes à la sortie}}{\text{xylènes à l'entrée}}$ | | | 1,038 | 1,013 | 1,022 |

Ce tableau permet de constater que les catalyseurs selon l'invention sont de bons catalyseurs d'isomérisation, le rapport xylènes à la sortie/xylènes à l'entrée étant élevé, ce qui prouve qu'une grande partie de l'éthylbenzène converti se trouve sous forme de xylènes.

## Revendications

1. Un catalyseur d'hydrotraitement d'hydrocarbures comprenant

— un support en oxyde minéral réfractaire,
— un élément halogène présent sous forme combinée,
— sous forme libre ou combinée :
    a) de 0,02 à 2 % et, de préférence, de 0,10 à 0,70 %, rapporté au poids total du catalyseur, d'au moins un métal M1 appartenant à la mine du platine,
    b) de 0,02 à 2 % et, de préférence, de 0,05 à 0,60 %, rapporté au poids total du catalyseur, d'étain,
— sous forme combinée, au moins un métal M2 choisi dans les groupes IA et IAA de la classification

9

périodique des éléments, ce catalyseur étant caractérisé en ce que la quantité du métal M2 est telle que le rapport M2/M1 du nombre d'atomes du métal M2 au nombre d'atomes du métal M1 soit tel que $0,2 \leqslant M2/M1 \leqslant 10$, et en ce que l'élément halogène représente 0,3 à 3 % du poids total du catalyseur.

2. Catalyseur selon la revendication 1, caractérisé en ce que le dit rapport M2/M1 est tel que $0,5 \leqslant M2/M1 \leqslant 5$.

3. Catalyseur selon l'une des revendications 1 et 2, caractérisé en ce que l'élément halogène représente 0,6 à 2,3 % du poids total du catalyseur.

4. Catalyseur selon l'une des revendications 1 à 3, caractérisé en ce que le métal M2 est choisi dans le groupe comprenant le sodium, le lithium, le potassium, le calcium et le baryum.

5. Catalyseur d'hydrotraitement selon l'une des revendications 1 à 4, caractérisé en ce que ledit support a une surface spécifique supérieure à 15 m$^2$ par gramme et un volume poreux spécifique supérieur à 0,1 cm$^3$ par gramme.

6. Catalyseur d'hydrotraitement selon l'une des revendications 1 à 5, caractérisé en ce que le métal de la mine du platine est le platine.

7. Catalyseur d'hydrotraitement selon l'une des revendications 1 à 6, caractérisé en ce que l'halogène que comporte le catalyseur est le chlore.

8. Catalyseur d'hydrotraitement selon l'une des revendications 1 à 7, caractérisé en ce que le support est une alumine dont la surface est comprise entre 15 et 350 m$^2$ par gramme.

9. Catalyseur d'hydrotraitement selon la revendication 8, caractérisé en ce que la surface de l'alumine est comprise entre 100 et 350 m$^2$ par gramme.

10. Procédé de préparation d'un catalyseur d'hydrotraitement selon l'une des revendications 4 à 9, caractérisé en ce qu'il comprend au moins une imprégnation du support poreux par au moins une solution contenant au moins un élément choisi dans le groupe constitué par l'étain, les métaux des groupes IA et IIA et de la mine du platine, ledit support pouvant être, entre chaque dépôt, calciné à une température qui est :

— dans le cas de l'étain, comprise entre 400 et 700 °C,
— dans le cas du platine, inférieure à 550 °C,
— dans le cas des autres métaux de la mine du platine, inférieure à 600 °C,
— dans le cas des métaux des groupes IA et IIA, inférieure à 600 °C.

11. Procédé de préparation selon la revendication 10, caractérisé en ce que, après le dépôt de l'étain, le support est calciné à une température inférieure ou égale à 600 °C.

12. L'application des catalyseurs conformes à l'une des revendications 4 à 9 au reformage, en présence d'hydrogène, de fractions d'hydrocarbures dont la teneur en soufre est inférieure à 10 p.p.m. (parties par million) et dont la température d'ébullition sous la pression atmosphérique est comprise entre 35 et 250 °C.

13. L'application selon la revendication 12 au reformage de fractions d'hydrocarbures dont la teneur en soufre est inférieure à 1 p.p.m. (partie par million).

14. L'application des catalyseurs conformes à l'une des revendications 4 à 9 à l'isomérisation d'hydrocarbures en présence d'hydrogène.

## Claims

1. A catalyst for the hydrotreatment of hydrocarbons comprising

— a refractory mineral oxide support medium,
— a halogen element present in a combined form,
— in free or combined form :
a) from 0.02 to 2 % and preferably from 0.10 to 0.70 % with respect to the total weight of the catalyst, of at least one metal M1 belonging to the ore of platinum,
b) from 0.02 to 2 % and preferably from 0.05 to 0.60 % with respect to the total weight of the catalyst, of tin,
— in combined form, at least one metal M2 chosen from the groups IA and IIA of the periodic classification of elements, this catalyst being characterized in that the amount of the metal M2 is such that the ratio M2/M1 of the number of atoms of the metal M2 to the number of atoms of the metal M1 is such that $0.2 \leqslant M2/M1 \leqslant 10$ and in that the halogen element represents 0.3 to 3 % of the total weight of the catalyst.

2. The catalyst according to claim 1, characterized in that said ratio M2/M1 is such that $0.5 \leqslant M2/M2 \leqslant 5$.

3. The catalyst according to one of claims 1 and 2, characterized in that the halogen element represents 0.6 to 2.3 % of the total weight of the catalyst.

4. The catalyst according to one of claims 1 to 3, characterized in that the metal M2 is chosen from the group comprising sodium, lithium, potassium, calcium and barium.

5. A hydrotreatment catalyst according to one of claims 1 to 4, characterized in that said support medium has a specific area greater than 15 m² per gramme and a specific porous volume greater than 0.1 cm³ per gramme.

6. A hydrotreatment catalyst according to one of claims 1 to 5, characterized in that the metal from the ore of platinum is platinum.

7. A hydrotreatment catalyst according to one of claims 1 to 6, characterized in that the halogen which the catalyst comprises is chlorine.

8. A hydrotreatment catalyst according to one of claims 1 to 7, characterized in that the support medium is alumina whose area is between 15 and 350 m² per gramme.

9. A hydrotreatment catalyst according to claim 8, characterized in that the area of the alumina is between 100 and 350 m² per gramme.

10. A process for preparing a hydrotreatment catalyst according to one of claims 4 to 9, characterized in that it comprises at least impregnation of the porous support medium by at least one solution containing at least one element chosen from the group formed by tin, the metals of groups IA and IIA and platinum ore, said support medium being possibly, between each deposit, calcinated at a temperature which is :

— in the case of tin, between 400 and 700 °C,
— in the case of platinum, less than 550 °C,
— in the case of other metals from platinum ore, less than 600 °C,
— in the case of metals from groups IA and IIA, less than 600 °C.

11. A preparation process according to claim 10, characterized in that, after depositing the tin, the support medium is calcinated at a temperature less than or equal to 600 °C.

12. The application of catalysts conforming to one of claims 4 to 9 to reforming, in the presence of hydrogen, of hydrocarbon fractions whose sulfur content is less than 10 p.p.m. and whose boiling temperature at atmospheric pressure is between 35 and 250 °C.

13. The application according to claim 12 to reforming hydrocarbon fractions whose sulfur content is less than 1 p.p.m.

14. The application of catalysts conforming to one of claims 4 to 9 to the isomerization of hydrocarbons in the presence of hydrogen.

## Ansprüche

1. Ein Katalysator zur Wasserstoffbehandlung von Kohlenwasserstoffen, welcher einen Träger aus einem feuerfesten, mineralischen Oxyd, ein Halogenelement in gebundener Form, in freier oder gebundener Form

a) 0,02 bis 2 %, vorzugsweise 0,10 bis 0,70 %, bezogen auf das Katalysatorgesamtgewicht, an wenigstens einem Metall M1 aus der Gruppe der Platinmetalle,
b) 0,02 bis 2 %, vorzugsweise 0,05 bis 0,60 %, bezogen auf das Katalysatorgesamtgewicht, an Zinn,

mindestens ein aus den Gruppen IA und IIA des Periodensystems der Elemente ausgewähltes Metall M2 in gebundener Form aufweist, dadurch gekennzeichnet, daß das Metall M2 in solcher Menge vorgesehen ist, daß für das Verhältnis M2/M1 der Anzahl der Atome des Metalls M2 zur Anzahl der Atome des Metalls M1 gilt : $0{,}2 \leqslant M2/M1 \leqslant 10$, und daß das Halogenelement 0,3 bis 3 % vom Katalysatorgesamtgewicht ausmacht.

2. Katalysator nach Anspruch 1, dadurch gekennzeichnet, daß für das besagte Verhältnis M2/M1 gilt : $0{,}5 \leqslant M2/M1 \leqslant 5$.

3. Katalysator nach Anspruch 1 oder 2, dadurch gekennzeichnet, daß das Halogenelement 0,6 bis 2,3 % vom Katalysatorgesamtgewicht ausmacht.

4. Ein Katalysator nach Anspruch 1, 2 oder 3, dadurch gekennzeichnet, daß das Metall M2 aus der Gruppe bestehend aus Natrium, Lithium, Kalium, Kalzium und Barium ausgewählt ist.

5. Ein Katalysator zur Wasserstoffbehandlung nach einem der Ansprüche 1 bis 4, dadurch gekennzeichnet, daß der Träger eine spezifische Oberfläche größer als 15 m²/Gramm und ein spezifisches Porenvolumen größer als 0,1 cm³/Gramm aufweist.

6. Ein Katalysator zur Wasserstoffbehandlung nach einem der Ansprüche 1 bis 5, dadurch gekennzeichnet, daß das Metall M1 aus der Gruppe der Platinmetalle Platin ist.

7. Ein Katalysator zur Wasserstoffbehandlung nach einem der Ansprüche 1 bis 6, dadurch gekennzeichnet, daß das Halogen, welches der Katalysator aufweist, Chlor ist.

8. Ein Katalysator zur Wasserstoffbehandlung nach einem der Ansprüche 1 bis 7, dadurch gekennzeichnet, daß der Träger eine Tonerde mit einer Oberfläche zwischen 15 und 350 m²/Gramm ist.

9. Ein Katalysator zur Wasserstoffbehandlung nach Anspruch 8, dadurch gekennzeichnet, daß die Oberfläche der Tonerde zwischen 100 und 350 m²/Gramm liegt.

10. Verfahren zur Herstellung eines Katalysators zur Wasserstoffbehandlung nach einem der Ansprüche 4 bis 9, dadurch gekennzeichnet, daß wenigstens eine Imprägnierung des porösen Trägers mit mindestens einer Lösung erfolgt, welche wenigstens ein Element enthält, das aus der aus Zinn, den Metallen der Gruppen IA und IIA des Periodensystems der Elemente und der Gruppe der Platinmetalle bestehenden Gruppe ausgewählt ist, wobei der Träger zwischen jeder Ablagerung kalziniert werden kann, und zwar bei einer Temperatur zwischen 400 und 700 °C im Falle von Zinn bzw. kleiner als 550 °C im Falle von Platin bzw. kleiner als 600 °C im Falle der anderen Metalle aus der Gruppe der Platinmetalle bzw. kleiner als 600 °C im Falle der Metalle der Gruppen IA und IIA des Periodensystems der Elemente.

11. Herstellungsverfahren nach Anspruch 10, dadurch gekennzeichnet, daß der Träger nach der Ablagerung von Zinn bei einer Temperatur kleiner als oder gleich 600 °C kalziniert wird.

12. Die Verwendung der Katalysatoren nach einem der Ansprüche 4 bis 9 zum Reformieren von Kohlenwasserstofffraktionen mit einem Schwefelgehalt kleiner als 10 ppm und mit einer Siedetemperatur bei Atmosphärendruck zwischen 35 und 250 °C in Gegenwart von Wasserstoff.

13. Die Verwendung nach Anspruch 12 zum Reformieren von Kohlenwasserstoffraktionen mit einem Schwefelgehalt kleiner als 1 ppm.

14. Die Verwendung der Katalysatoren nach einem der Ansprüche 4 bis 9 zum Isomerisieren von Kohlenwasserstoffen in Gegenwart von Wasserstoff.